# EUROPEAN PATENT SPECIFICATION

(11) **EP 4 095 490 B1**
(45) Date of publication and mention of the grant of the patent: **04.03.2026**
(21) Application number: 21744610.3
(22) Date of filing: 14.01.2021
(51) Int. Cl.: G01C 21/36, B60R 16/02, G01C 21/26

(54) **INFORMATION PROVISION DEVICE, INFORMATION PROVISION METHOD, INFORMATION PROVISION PROGRAM, AND RECORDING MEDIUM**
INFORMATIONSBEREITSTELLUNGSVORRICHTUNG, INFORMATIONSBEREITSTELLUNGSVERFAHREN, INFORMATIONSBEREITSTELLUNGSPROGRAMM UND AUFZEICHNUNGSMEDIUM
DISPOSITIF DE FOURNITURE D'INFORMATIONS, PROCÉDÉ DE FOURNITURE D'INFORMATIONS, PROGRAMME DE FOURNITURE D'INFORMATIONS ET SUPPORT D'ENREGISTREMENT

(30) Priority: 21.01.2020 JP 2020007866
(43) Date of publication of application: 30.11.2022
(73) Proprietor: Pioneer Corporation, Tokyo 113-0021 (JP)
(72) Inventor: OHISHI, Tomoya, Kawagoe-shi, Saitama 350-8555 (JP); FUJIE, Shogo, Kawagoe-shi, Saitama 350-8555 (JP); SATO, Shoko, Kawagoe-shi, Saitama 350-8555 (JP)
(74) Representative: Hoffmann Eitle
(86) International application number: PCT/JP2021/001126
(87) International publication number: WO 2021/149594

(56) References cited:
- WO-A1-2014/192103
- JP-A- 2004 030 212
- JP-A- 2006 048 171
- JP-A- 2006 251 298
- JP-A- 2014 207 614
- JP-A- H06 251 287
- JP-A- H06 251 287
- US-A1- 2015 293 362

## Description

### Field

The present invention relates to an information providing apparatus, an information providing method, an information providing program, and a storage medium.

### Background

A conventionally known target identifying apparatus identifies a target that is present around a vehicle and reads out information, such as a name related to the target, by voice (for example, see Patent Literature 1).

The target identifying apparatus described in Patent Literature 1 identifies a facility, for example, as the target, the facility being on a map and present in a pointing direction to which a passenger in the vehicle is pointing with the passenger's hand or finger.

JP 2006/048171 A discloses a status estimation device capable of estimating a status of a person affecting his/her gazing condition. The status estimation device comprises a second camera photographing an image around a vehicle, a first camera and a sight direction detection part detecting the sight direction of a driver, an object recognition part recognizing a gazed object gazed by the driver based on the image around the vehicle and the sight direction of the diver, a sight distribution computing part finding a sight distribution according to the gazing time at the gazed object, and a status estimation part estimating the status of the driver by recognizing a condition corresponding to the sight distribution by means of a linear recognition function stored in a storage part. An information providing device is also disclosed comprising a map information creation part showing information to the driver according to the status of the driver estimated by the status estimation part and an information output device.

### Citation List

### Patent Literature

Patent Literature 1: Japanese Unexamined Patent Application Publication No. 2007-080060

### Summary

### Technical Problem

However, the technique described in Patent Literature 1 has a problem, for example, of not being able to improve user-friendliness because the passenger in the vehicle is required to perform the operation of pointing the hand or finger at the target, the passenger desiring to obtain information related to the target.

The present invention has been made in view of the above and an object thereof is to provide an information providing apparatus, an information providing method, an information providing program, and a storage medium that enable user-friendliness to be improved, for example.

### Solution to Problem

The present invention provides an information providing apparatus, according to claim 1.

The present invention further provides an information providing method, according to claim 6.

The present invention also provides a non-transitory storage medium storing therein an information providing program, in accordance with claim **7.**

### Brief Description of Drawings

FIG. 1 is a block diagram illustrating a configuration of an information providing system according to a first embodiment.
FIG. 2 is a block diagram illustrating a configuration of an in-vehicle terminal.
FIG. 3 is a block diagram illustrating a configuration of an information providing apparatus.
FIG. 4 is a flowchart illustrating an information providing method.
FIG. 5 is a diagram for explanation of the information providing method.
FIG. 6 is a block diagram illustrating a configuration of an information providing apparatus according to a second embodiment.
FIG. 7 is a flowchart illustrating an information providing method.
FIG. 8 is a diagram for explanation of the information providing method.
FIG. 9 is a block diagram illustrating a configuration of an in-vehicle terminal according to a third embodiment.
FIG. 10 is a block diagram illustrating a configuration of an information providing apparatus according to the third embodiment.
FIG. 11 is a flowchart illustrating an information providing method.
FIG. 12 is a block diagram illustrating a configuration of an information providing apparatus according to a fourth embodiment.
FIG. 13 is a flowchart illustrating an information providing method.
FIG. 14 is a diagram for explanation of the information providing method.

### Description of Embodiments

Modes for implementing the present invention (hereinafter, embodiments) will be described below while reference is made to the drawings. The present invention is not limited by the embodiments described below. Furthermore, any portions that are the same will be assigned with the same reference sign, throughout the drawings.

### First Embodiment

### Schematic Configuration of Information Providing System

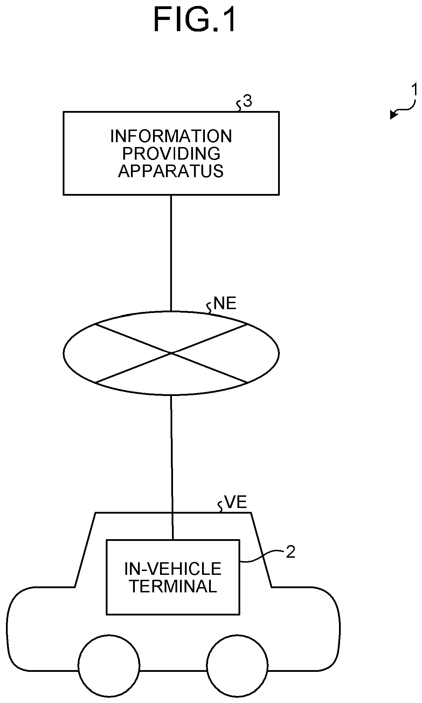

FIG. 1 is a block diagram illustrating a configuration of an information providing system 1 according to a first embodiment.

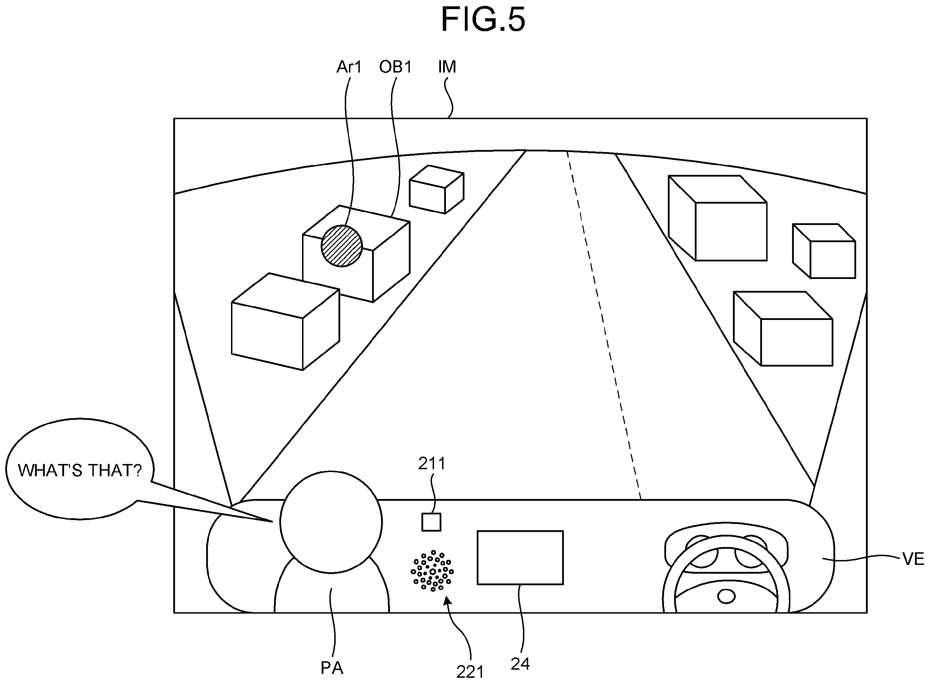

The information providing system 1 is a system that provides, to a passenger PA (see FIG. 5) in a vehicle VE (FIG. 1) that is a moving body, object information on an object (for example, a name of the object), such as a building, that is present around the vehicle VE. This information providing system 1 includes, as illustrated in FIG. 1, an in-vehicle terminal 2 and an information providing apparatus 3. The in-vehicle terminal 2 and the information providing apparatus 3 perform communication via a network NE (FIG. 1) that is a wireless communication network.

FIG. 1 illustrates, as an example, a case where the in-vehicle terminal 2 that performs communication with the information providing apparatus 3 is a single in-vehicle terminal, but the in-vehicle terminal 2 may include plural in-vehicle terminals respectively installed in plural vehicles. Furthermore, to provide object information to each of plural passengers riding on a single vehicle, a plurality of the in-vehicle terminals 2 may be installed in that single vehicle.

### Configuration of In-vehicle Terminal

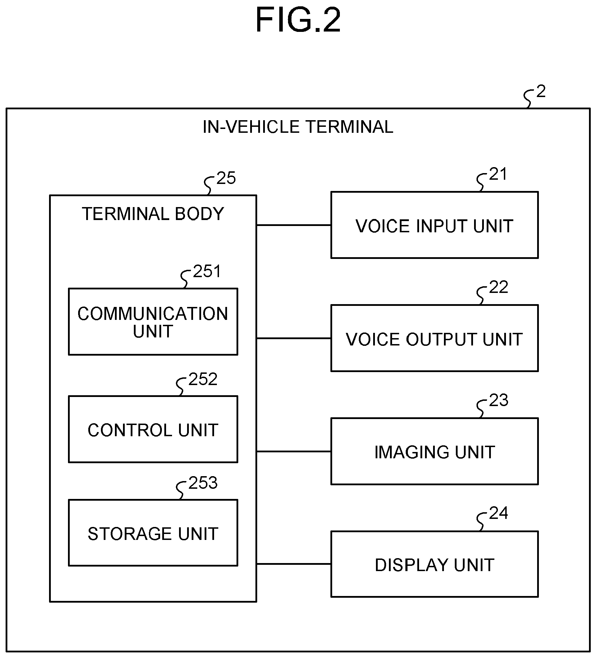

FIG. 2 is a block diagram illustrating a configuration of the in-vehicle terminal 2.

The in-vehicle terminal 2 is, for example, a stationary navigation device or drive recorder installed in the vehicle VE. Without being limited to the navigation device or drive recorder, a portable terminal, such as a smartphone used by the passenger PA in the vehicle VE, may be adopted as the in-vehicle terminal 2. This in-vehicle terminal 2 includes, as illustrated in FIG. 2, a voice input unit 21, a voice output unit 22, an imaging unit 23, a display unit 24, and a terminal body 25.

The voice input unit 21 includes a microphone 211 (see FIG. 5) to which voice is input and which converts the voice into an electric signal, and the voice input unit 21 generates voice information by performing analog/digital (A/D) conversion of the electric signal, for example. In this first embodiment, the voice information generated by the voice input unit 21 is a digital signal. The voice input unit 21 then outputs the voice information to the terminal body 25.

The voice output unit 22 includes a speaker 221 (see FIG. 5), converts a digital voice signal input from the terminal body 25 into an analog voice signal by digital/analog (D/A) conversion, and outputs voice corresponding to the analog voice signal from the speaker 221.

Under control of the terminal body 25, the imaging unit 23 generates a captured image by capturing an image of surroundings of the vehicle VE. The imaging unit 23 then outputs the generated captured image to the terminal body 25.

The display unit 24 includes a display using liquid crystal or organic electroluminescence (EL), for example, and displays various images under control of the terminal body 25.

The terminal body 25 includes, as illustrated in FIG. 2, a communication unit 251, a control unit 252, and a storage unit 253.

Under control of the control unit 252, the communication unit 251 transmits and receives information to and from the information providing apparatus 3 via the network NE.

The control unit 252 is implemented by a controller, such as a central processing unit (CPU) or a microprocessing unit (MPU), executing various programs stored in the storage unit 253, and controls the overall operation of the in-vehicle terminal **2.** Without being limited to the CPU or MPU, the control unit 252 may be formed of an integrated circuit, such as an application specific integrated circuit (ASIC) or a field programmable gate array (FPGA).

The storage unit 253 stores therein, for example, various programs executed by the control unit 252 and data needed for the control unit 252 to perform processing.

### Configuration of Information Providing Apparatus

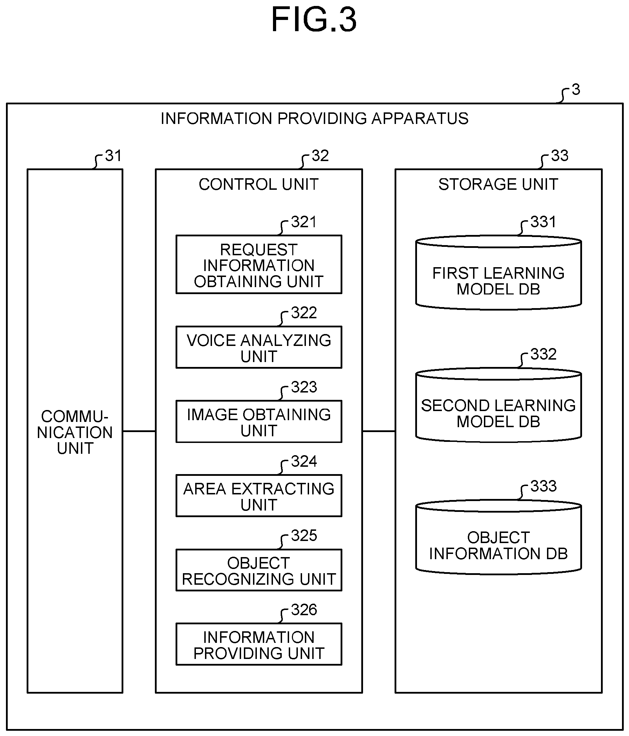

FIG. 3 is a block diagram illustrating a configuration of the information providing apparatus 3.

The information providing apparatus 3 is, for example, a server apparatus. This information providing apparatus 3 includes, as illustrated in FIG. 3, a communication unit 31, a control unit 32, and a storage unit 33.

Under control of the control unit 32, the communication unit 31 transmits and receives information to and from the in-vehicle terminal 2 (the communication unit 251) via the network NE.

The control unit 32 is implemented by a controller, such as a CPU or an MPU, executing various programs (including an information providing program according to this embodiment) stored in the storage unit 33, and controls the overall operation of the information providing apparatus 3. Without being limited to the CPU or MPU, the control unit 32 may be formed of an integrated circuit, such as an ASIC or FPGA. This control unit 32 includes, as illustrated in FIG. 3, a request information obtaining unit 321, a voice analyzing unit 322, an image obtaining unit 323, an area extracting unit 324, an object recognizing unit 325, and an information providing unit 326.

The request information obtaining unit 321 obtains request information that is from the passenger PA of the vehicle VE requesting object information to be provided. In this first embodiment, the request information is voice information generated by the voice input unit 21 on the basis of voice captured by the voice input unit 21, the voice being a word or words spoken by the passenger PA in the vehicle VE. That is, the request information obtaining unit 321 obtains the request information (the voice information) from the in-vehicle terminal 2 via the communication unit 31.

The voice analyzing unit 322 analyzes the request information (voice information) obtained by the request information obtaining unit 321.

The image obtaining unit 323 obtains a captured image generated by the imaging unit 23 from the in-vehicle terminal 2 via the communication unit 31.

The area extracting unit 324 extracts (predicts) an area of interest on which a line of sight is focused (the line of sight tends to be focused) in the captured image obtained by the image obtaining unit 323. In this first embodiment, the area extracting unit 324 extracts the area of interest in the captured image by using a so-called visual salience technique. More specifically, the area extracting unit 324 extracts the area of interest in the captured image by image recognition (image recognition using artificial intelligence (AI)) using a first learning model described below.

The first learning model is a model obtained by machine learning (for example, deep learning) areas using training images that are images including the areas that have been identified by use of an eye tracker as areas on which lines of sight of a subject are focused, the areas having been labelled beforehand.

The object recognizing unit 325 recognizes an object included in an area of interest that is in a captured image and that has been extracted by the area extracting unit 324. In this first embodiment, the object recognizing unit 325 recognizes the object included in the area of interest in the captured image by image recognition (image recognition using AI) using a second learning model described below.

The second learning model is a model obtained by machine learning (for example, deep learning) features of various objects including animals, mountains, rivers, lakes, and facilities, on the basis of training images that are captured images including these various objects captured therein.

The information providing unit 326 provides object information related to an object recognized by the object recognizing unit 325. More specifically, the information providing unit 326 reads the object information corresponding to the object recognized by the object recognizing unit 325 from an object information database (DB) 333 in the storage unit 33. The information providing unit 326 then transmits the object information to the in-vehicle terminal 2 via the communication unit 31.

The storage unit 33 stores, in addition to the various programs (the information providing program according to this embodiment) executed by the control unit 32, data needed for the control unit 32 to perform processing, for example. This storage unit 33 includes, as illustrated in FIG. 3, a first learning model DB 331, a second learning model DB 332, and the object information DB 333.

The first learning model DB 331 stores therein the first learning model described above.

The second learning model DB 332 stores therein the second learning model described above.

The object information DB 333 stores therein the object information described above. The object information DB 333 stores therein plural pieces of object information associated with various objects. A piece of object information is information describing an object, such as a name of the object, and includes text data, voice data, or image data.

### Information Providing Method

An information providing method executed by the information providing apparatus 3 (the control unit 32) will be described next.

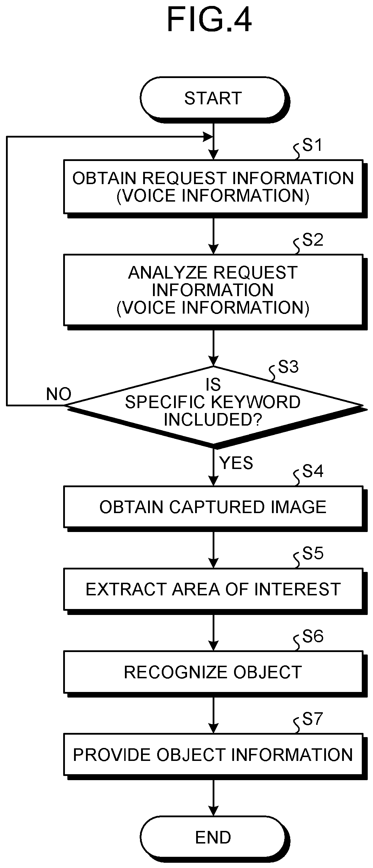

FIG. 4 is a flowchart illustrating the information providing method. FIG. 5 is a diagram for explanation of the information providing method. Specifically, FIG. 5 is a diagram illustrating a captured image IM generated by the imaging unit 23 and obtained at Step S4. FIG. 5 illustrates, as an example, a case where the imaging unit 23 has been installed in the vehicle VE such that an image of a front view from the vehicle VE is captured through a windshield from the interior of the vehicle VE. Furthermore, FIG. 5 illustrates, as an example, a case where the passenger PA sitting in the front passenger seat of the vehicle VE is included as a subject in the captured image IM. In addition, FIG. 5 illustrates, as an example, a case where the passenger PA is speaking words, "What's that?".

The imaging unit 23 is not necessarily installed at the position described above. For example, the imaging unit 23 may be installed in the vehicle VE such that an image of the left view, the right view, or the rear view from the vehicle VE is captured, or may be installed outside the vehicle VE such that an image of surroundings of the vehicle VE is captured. Furthermore, a passenger in a vehicle according to this embodiment is not necessarily a passenger sitting in the front passenger seat of the vehicle VE and includes, for example, a passenger sitting in the driver's seat or a rear seat. In addition, a plurality of the imaging units 23 may be provided instead of just one.

Firstly, the request information obtaining unit 321 obtains request information (voice information) from the in-vehicle terminal 2 via the communication unit 31 (Step S11).

After Step S1, the voice analyzing unit 322 analyzes the request information (the voice information) obtained at Step S1 (Step S2).

After Step S2, the voice analyzing unit 322 determines whether or not a specific keyword or keywords is/are included in the request information (voice information) as a result of analyzing the request information (the voice information) at Step S2 (Step S3).

The specific keyword or keywords is/are a word or words of the passenger PA in the vehicle VE requesting object information to be provided, and examples of the specific keyword or keywords include "What's that?", "Could you tell me what that is?", " What can that be?", and "Can you tell me?".

In a case where it has been determined that the specific keyword or keywords is/are not included (Step S3: No), the control unit 32 returns to Step S1.

On the contrary, in a case where it has been determined that the specific keyword or keywords is/are included (Step S3: Yes), the image obtaining unit 323 obtains the captured image IM generated by the imaging unit 23 from the in-vehicle terminal 2 via the communication unit 31 (Step S4: an image obtaining step).

In FIG. 4 and FIG. 5, the image obtaining unit 323 is configured to obtain the captured image IM generated by the imaging unit 23 from the in-vehicle terminal 2 via the communication unit 31 at the time when the passenger PA in the vehicle VE speaks the words, "What's that?" (Step S3: Yes), but the embodiment is not limited to this example. For example, the information providing apparatus 3 sequentially obtains captured images generated by the imaging unit 23 from the in-vehicle terminal 2 via the communication unit 31. The image obtaining unit 323 may be configured to obtain, from the sequentially obtained captured images, a captured image to be used in processing from Step S4, the captured image being a captured image obtained at the time when the passenger PA in the vehicle VE speaks the words, "What's that?" (Step S3: Yes).

After Step S4, the area extracting unit 324 extracts an area of interest Ar1 (FIG. 5) on which a line of sight is focused in the captured image IM by image recognition using the first learning model stored in the first learning model DB 331 (Step S5: an area extracting step).

After Step S5, the object recognizing unit 325 recognizes, in the captured image IM, an object OB1 included in the area of interest Ar1 extracted at Step S5 by image recognition using the second learning model stored in the second learning model DB 332 (Step S6: an object recognizing step).

After Step S6, the information providing unit 326 reads object information corresponding to the object OB1 recognized at Step S6 from the object information DB 333 and transmits the object information to the in-vehicle terminal 2 via the communication unit 31 (Step S7: an information providing step). The control unit 252 then controls operation of at least any of the voice output unit 22 and display unit 24 and informs the passenger PA in the vehicle VE of the object information transmitted from the information providing apparatus 3 by at least any of voice, text, and an image. For example, if the object OB1 is "Moulin Rouge", the passenger PA in the vehicle VE is informed of the object information, "That is Moulin Rouge. Glamourous dancing shows are held at night there.", for example, by voice. In a case where the object OB1 is an animal, a buffalo, instead of a building, the passenger PA in the vehicle VE is informed of the object information, "That is a buffalo. Buffaloes move around in herds.", for example, by voice.

The above described first embodiment has the following effects.

The information providing apparatus 3 according to the first embodiment obtains the captured image IM by capturing an image of surroundings of the vehicle VE and extracts the area of interest Ar1 on which a line of sight is focused in the captured image IM. The information providing apparatus 3 then recognizes the object OB1 included in the area of interest Ar1 in the captured image IM and transmits object information related to the object OB1 to the in-vehicle terminal 2. As a result, the passenger PA in the vehicle VE and desiring to obtain the object information related to the object OB1 recognizes the objet information related to the object OB1 by being informed of the object information from the in-vehicle terminal 2.

Therefore, there is no need to make the passenger PA perform the conventional operation of pointing the passenger PA's hand or finger at the object OB1, the passenger PA being in the vehicle VE and desiring to obtain the object information related to the object OB1, and user-friendliness is thus able to be improved.

In particular, the information providing apparatus 3 extracts the area of interest Ar1 on which a line of sight is focused in the captured image IM by using the so-called visual salience technique. Therefore, even if the passenger PA in the vehicle VE does not point the passenger PA's hand or finger to the object OB1, the area including the object OB1 is able to be extracted accurately as the area of interest Ar1.

Furthermore, the information providing apparatus 3 provides the object information in response to request information that is from the passenger PA in the vehicle VE requesting the object information to be provided. Therefore, as compared to a configuration that constantly provides object information regardless of the request information, the processing load on the information providing apparatus 3 is able to be reduced.

### Second Embodiment

A second embodiment will be described next.

In the following description, any component that is the same as that of the first embodiment described above will be assigned with the same reference sign, and detailed description thereof will be omitted or simplified.

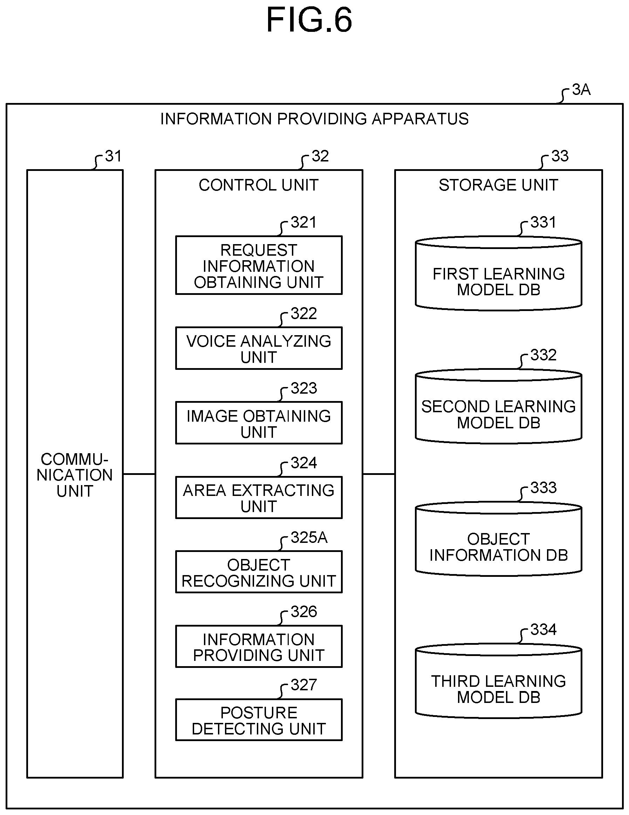

FIG. 6 is a block diagram illustrating a configuration of an information providing apparatus 3A according to the second embodiment.

The information providing apparatus 3A according to the second embodiment has, as illustrated in FIG. 6, functions of a posture detecting unit 327 in the control unit 32, additionally to the information providing apparatus 3 (see FIG. 3) described above with respect to the first embodiment. Furthermore, functions of the object recognizing unit 325 have been modified in the information providing apparatus 3A. An object recognizing unit according to the second embodiment will hereinafter be referred to as an object recognizing unit 325A (see FIG. 6) for convenience of explanation. In addition, the information providing apparatus 3A has a third learning model DB 334 (see FIG. 6) added in the storage unit 33.

The posture detecting unit 327 detects a posture of a passenger PA in a vehicle VE. In this second embodiment, the posture detecting unit 327 detects the posture by so-called skeleton detection. More specifically, the posture detecting unit 327 detects the posture of the passenger PA in the vehicle VE by detecting the skeleton of the passenger PA included as a subject in a captured image IM, through image recognition (image recognition using AI) using a third learning model described below.

The third learning model is a model obtained by machine learning (for example, deep learning) positions of joints of a person captured in captured images, on the basis of training images that are images having these positions labelled beforehand for the captured images.

The third learning model DB 334 stores therein the third learning model.

The object recognizing unit 325A has a function (hereinafter, referred to as an additional function) executed in a case where plural areas of interest have been extracted in the captured image IM by the area extracting unit 324, in addition to functions that are the same as those of the object recognizing unit 325 described above with respect to the first embodiment. This additional function is as follows.

That is, the object recognizing unit 325A identifies any one area of interest of the plural areas of interest on the basis of a posture of the passenger PA detected by the posture detecting unit 327. Similarly to the object recognizing unit 325 described above with respect to the first embodiment, the object recognizing unit 325A recognizes an object included in the identified one area of interest in the captured image IM by image recognition using the second learning model.

An information providing method executed by the information providing apparatus 3A will be described next.

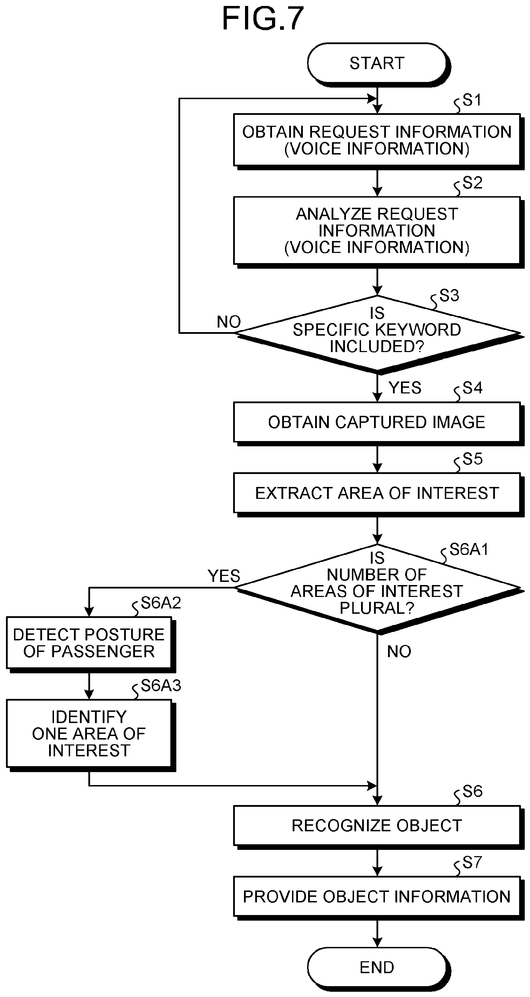

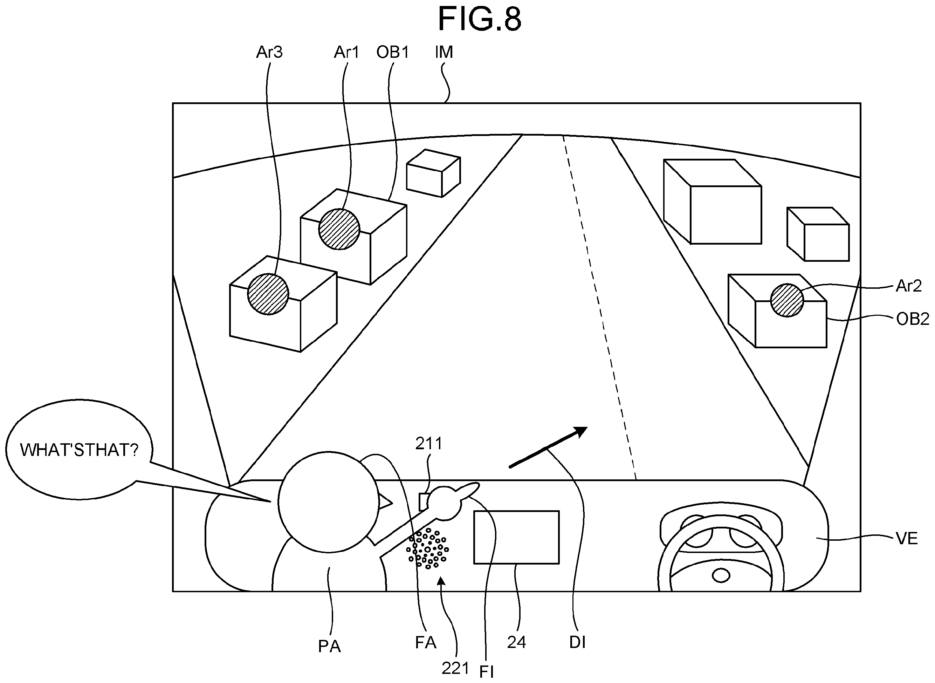

FIG. 7 is a flowchart illustrating the information providing method. FIG. 8 is a diagram for explanation of the information providing method. Specifically, FIG. 8 is a diagram corresponding to FIG. 5 and illustrates the captured image IM generated by the imaging unit 23 and obtained at Step S4.

In the information providing method according to this second embodiment, as illustrated in FIG. 7, Steps S6A1 to S6A3 have been added to the information providing method (see FIG. 4) described above with respect to the first embodiment. Therefore, only Steps S6A1 to S6A3 will be described mainly below. Steps S6A1 to S6A3 and S6 correspond to an object recognizing step according to this embodiment.

Step S6A1 is executed after Step S5.

Specifically, the control unit 32 determines whether or not the number of areas of interest extracted at Step S5 is plural at Step S6A1. FIG. 8 illustrates, as an example, a case where three areas of interest Ar1 to Ar3 have been extracted at Step S5.

If it has been determined that the number of areas of interest is one (Step S6A1: No), the control unit 32 proceeds to Step S6 and recognizes an object (for example, an object OB1) included in the single area of interest (for example, the area of interest Ar1, similarly to the first embodiment described above).

On the contrary, if the control unit 32 has determined that the number of areas of interest is plural (Step S6A1: Yes), the control unit 32 proceeds to Step S6A2.

At Step S6A2, the posture detecting unit 327 then detects a posture of the passenger PA who is included in the captured image IM as a subject and who is in the vehicle VE, by detecting a skeleton of the passenger PA through image recognition using the third learning model stored in the third learning model DB 334.

After Step S6A2, the object recognizing unit 325A identifies a direction DI (FIG. 8) of the face FA and/or a finger FI of the passenger PA from the posture of the passenger PA detected at Step S6A2. The object recognizing unit 325A then identifies the one area of interest Ar2 positioned in the direction DI, with the passenger PA serving as a reference, among the three areas of interest Ar1 to Ar3 extracted at Step S5, in the captured image IM (Step S6A3).

After Step S6A3, the control unit 32 then proceeds to Step S6 and recognizes an object OB2 (FIG. 8) included in that one area of interest Ar2.

The second embodiment described above has the following effects, in addition to effects similar to the above described effects of the first embodiment.

In a case where the plural areas of interest Ar1 to Ar3 have been extracted in the captured image IM, the information providing apparatus 3A according to the second embodiment detects a posture of the passenger PA in the vehicle VE and identifies the one area of interest Ar2 from the plural areas of interest Ar1 to Ar3 on the basis of the posture. The information providing apparatus 3 then recognizes the object OB2 included in the identified area of interest Ar2.

Therefore, even in a case where the plural areas of interest Ar1 to Ar3 have been extracted in the captured image IM, the area including the object OB2 for which the passenger PA in the vehicle VE desires to obtain object information is able to be identified as the area of interest Ar2 accurately. Therefore, an appropriate piece of object information is able to be provided to the passenger PA in the vehicle VE.

In particular, the information providing apparatus 3A detects a posture of the passenger PA in the vehicle VE by the so-called skeleton detection. Therefore, the posture is able to be detected highly accurately, and even in a case where the plural areas of interest Ar1 to Ar3 have been extracted in the captured image IM, an appropriate piece of object information is able to be provided to the passenger PA in the vehicle VE.

### Third Embodiment

A third embodiment will be described next.

In the following description, any component that is the same as that of the first embodiment described above will be assigned with the same reference sign, and detailed description thereof will be omitted or simplified.

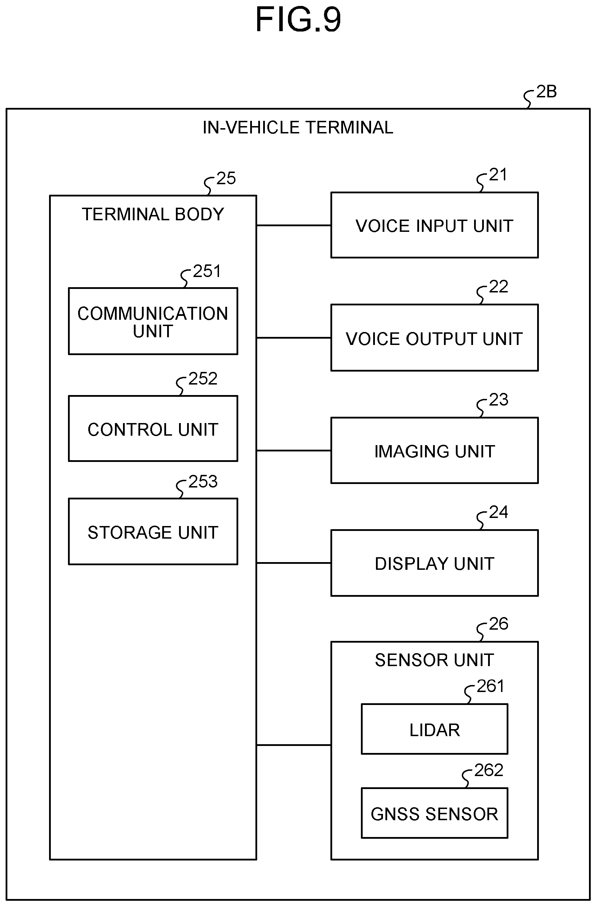

FIG. 9 is a block diagram illustrating a configuration of an in-vehicle terminal 2B according to a third embodiment.

The in-vehicle terminal 2B according to this third embodiment has, as illustrated in FIG. 9, a sensor unit 26, added in the in-vehicle terminal 2 (see FIG. 2) described above with respect to the first embodiment.

The sensor unit 26 includes, as illustrated in FIG. 9, a lidar 261 and a global navigation satellite system (GNSS) sensor 262.

The lidar 261 discretely measures distance to an object that is present in one's external environment, recognizes a surface of the object as a three-dimensional point group, and generates point group data. Without being limited to the lidar 261, any other external sensor, such as a milliwave radar or a sonar, which is a sensor that is able to measure the distance to the object present in the external environment, may be adopted.

The GNSS sensor 262 receives radio waves including position measurement data transmitted from a navigation satellite by using a GNSS. The position measurement data is used to detect an absolute position of a vehicle VE from latitude and longitude information, for example, and corresponds to positional information according to this embodiment. The GNSS used may be a global positioning system (GPS), for example, or any other system.

The sensor unit 26 then outputs output data, such as the point group data and the position measurement data, to the terminal body 25.

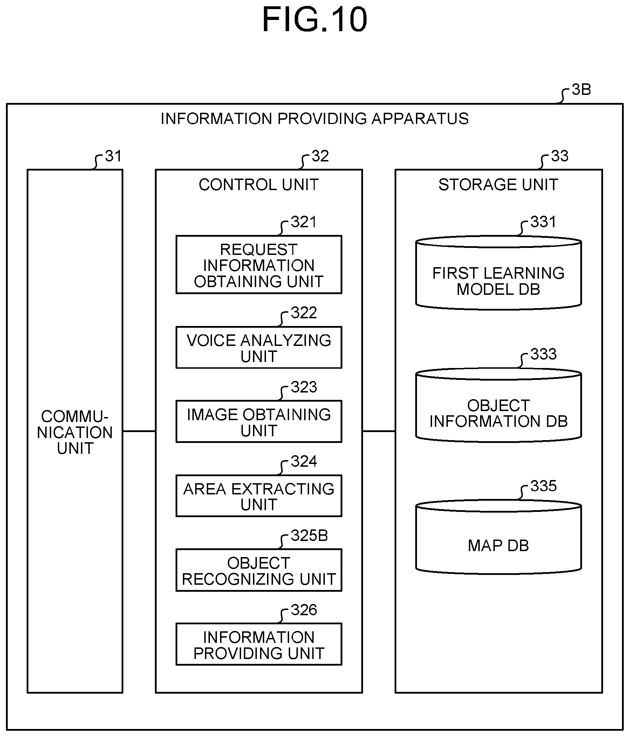

FIG. 10 is a block diagram illustrating a configuration of an information providing apparatus 3B according to the third embodiment.

Functions of the object recognizing unit 325 in the information providing apparatus 3B according to this third embodiment have been modified from those of the information providing apparatus 3 (see FIG. 3) described above with respect to the first embodiment. An object recognizing unit according to the third embodiment will hereinafter be referred to as an object recognizing unit 325B (see FIG. 10) for convenience of explanation. Furthermore, the information providing apparatus 3B has the second learning model DB 332 omitted and a map DB 335 (see FIG. 10) added, in the storage unit 33.

The map DB 335 stores therein map data. The map data includes, for example: road data represented by links corresponding to roads and nodes corresponding to junctions (intersections) between roads; and facility information having facilities and positions of the facilities (hereinafter, referred to as facility positions) associated with each other respectively.

The object recognizing unit 325B obtains output data (point group data generated by the lidar 261 and position measurement data received by the GNSS sensor 262) of the sensor unit 26 from the in-vehicle terminal 2 via the communication unit 31. The object recognizing unit 325B then recognizes an object included in an area of interest extracted by the area extracting unit 324, in a captured image IM, on the basis of the output data, the captured image IM, and the map data stored in the map DB 335.

The object recognizing unit 325B described above corresponds to a positional information obtaining unit and a facility information obtaining unit, in addition to an object recognizing unit according to this embodiment.

An information providing method executed by the information providing apparatus 3B will be described next.

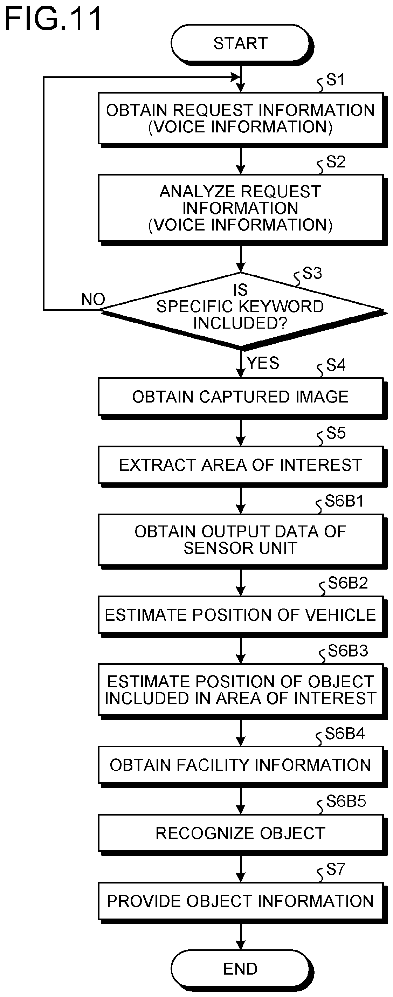

FIG. 11 is a flowchart illustrating the information providing method.

The information providing method according to this third embodiment has, as illustrated in FIG. 11, Steps S6B1 to S6B5 added to the information providing method (see FIG. 4) described above with respect to the first embodiment, instead of Step S6. Therefore, only Steps S6B1 to S6B5 will be described mainly below. These steps S6B1 to S6B5 correspond to an object recognizing step according to this embodiment.

Step S6B1 is executed after Step S5.

Specifically, at Step S6B1, the object recognizing unit 325B obtains output data (point group data generated by the lidar 261 and position measurement data generated by the GNSS sensor 262) of the sensor unit 26 from the in-vehicle terminal 2 via the communication unit 31.

In FIG. 11, the object recognizing unit 325B is configured to obtain the output data of the sensor unit 26 from the in-vehicle terminal 2 via the communication unit 31 at the time when a passenger PA in the vehicle VE speaks words including a specific keyword or keywords (Step S3: Yes), but the embodiment is not limited to this example. For example, the information providing apparatus 3B sequentially obtains sets of output data of the sensor unit 26 from the in-vehicle terminal 2 via the communication unit 31. The object recognizing unit 325B may be configured to obtain, from the sequentially obtained sets of output data, a set of output data to be used in processing from Step S6B1, the set of output data being a set of output data obtained at the time when the passenger PA in the vehicle VE speaks words including a specific keyword or keywords (Step S3: Yes).

After Step S6B1, the object recognizing unit 325B estimates a position of the vehicle VE on the basis of the output data obtained at Step S6B1 (the position measurement data received by the GNSS sensor 262) and the map data stored in the map DB 335 (Step S6B2).

After Step S6B2, the object recognizing unit 325B estimates a position of an object included in an area of interest that has been extracted at Step S5 and that is in the captured image IM (Step S6B3). The object recognizing unit 325B estimates the position of the object by using the output data (the point group data) obtained at Step S6B1, the position of the vehicle VE estimated at Step S6B2, and the position of the area of interest that has been extracted at Step S5 and that is in the captured image IM.

After Step S6B3, the object recognizing unit 325B obtains facility information including a facility position that is approximately the same as the position of the object estimated at Step S6B3, from the map DB 335 (Step S6B4).

After Step S6B4, the object recognizing unit 325B recognizes, as the object included in the area of interest that has been extracted at Step S5 and that is in the captured image IM, a facility included in the facility information obtained at Step S6B4 (Step S6B5).

The control unit 32 then proceeds to Step S7 after Step S6B5.

The third embodiment described above has the following effects, in addition to effects similar to the above described effects of the first embodiment.

The information providing apparatus 3B according to this third embodiment recognizes an object included in an area of interest in the captured image IM on the basis of positional information (position measurement data received by the GNSS sensor 262) and facility information. In other words, the information providing apparatus 3B recognizes the object included in the area of interest in the captured image IM on the basis of information (positional information and facility information) widely used in navigation equipment.

Therefore, there is no need to provide the second learning model DB 332 described above with respect to the first embodiment and the information providing apparatus 3B is able to be configured more simply.

### Fourth Embodiment

A fourth embodiment will be described next.

In the following description, any component that is the same as that of the first embodiment described above will be assigned with the same reference sign, and detailed description thereof will be omitted or simplified.

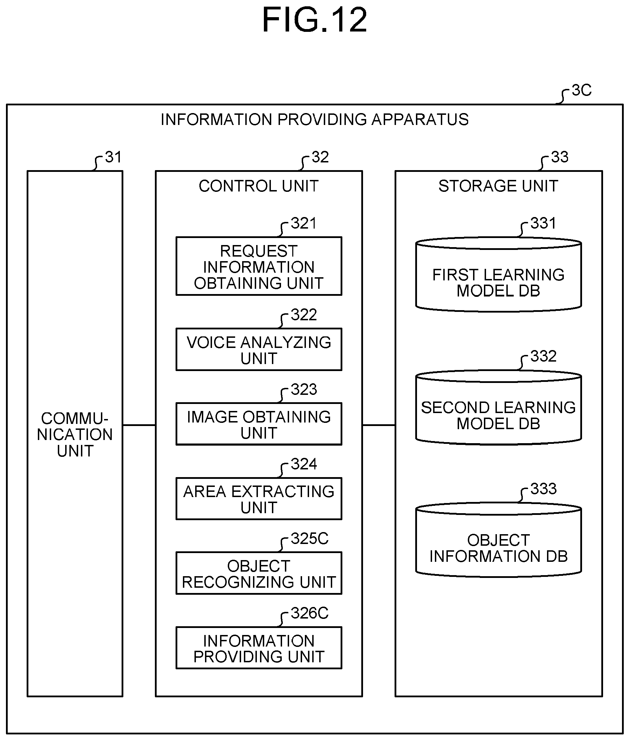

FIG. 12 is a block diagram illustrating a configuration of an information providing apparatus 3C according to the fourth embodiment.

Functions of the object recognizing unit 325 and information providing unit 326 have been modified in the information providing apparatus 3C according to the fourth embodiment, as illustrated in FIG. 12, from those of the information providing apparatus 3 (see FIG. 3) described above with respect to the first embodiment. An object recognizing unit according to the fourth embodiment will hereinafter be referred to as an object recognizing unit 325C (see FIG. 12), and an information providing unit according to the fourth embodiment as an information providing unit 326C (see FIG. 12), for convenience of explanation.

The object recognizing unit 325C has a function (hereinafter, referred to as an additional function) executed in a case where plural areas of interest have been extracted in a captured image IM by the area extracting unit 324, in addition to functions that are the same as those of the object recognizing unit 325 described above with respect to the first embodiment. This additional function is as follows.

That is, the object recognizing unit 325C recognizes objects respectively included in the plural areas of interest in the captured image IM, by image recognition using the second learning model.

The information providing unit 326C has a function (hereinafter, referred to as an additional function) executed in the case where plural areas of interest have been extracted in the captured image IM by the area extracting unit 324, in addition to functions that are the same as those of the information providing unit 326 described above with respect to the first embodiment. This additional function is as follows.

That is, the information providing unit 326C identifies one object of the objects recognized by the object recognizing unit 325C on the basis of a result of analysis by the voice analyzing unit 322 and object information stored in the object information DB 333. The information providing unit 326C then transmits object information corresponding to that one object identified, to the in-vehicle terminal 2 via the communication unit 31.

An information providing method executed by the information providing apparatus 3C will be described next.

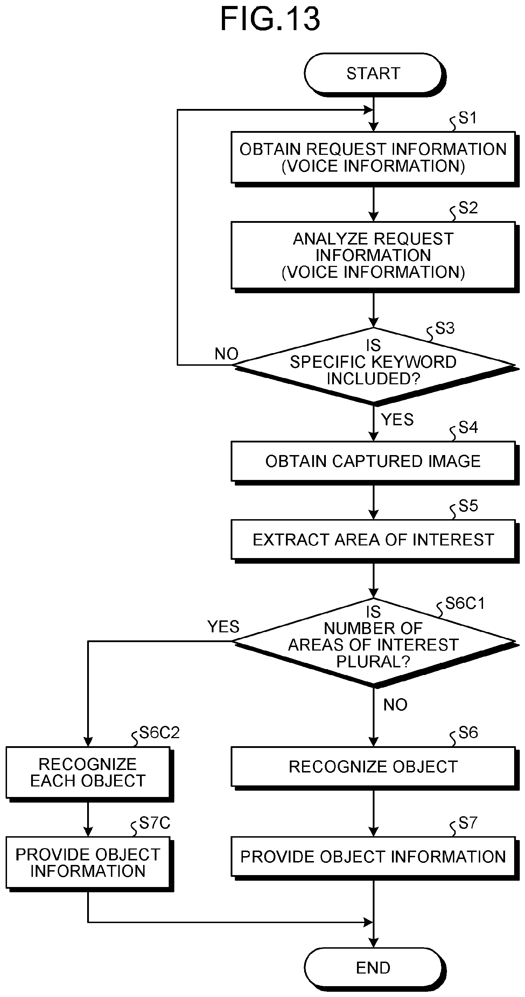

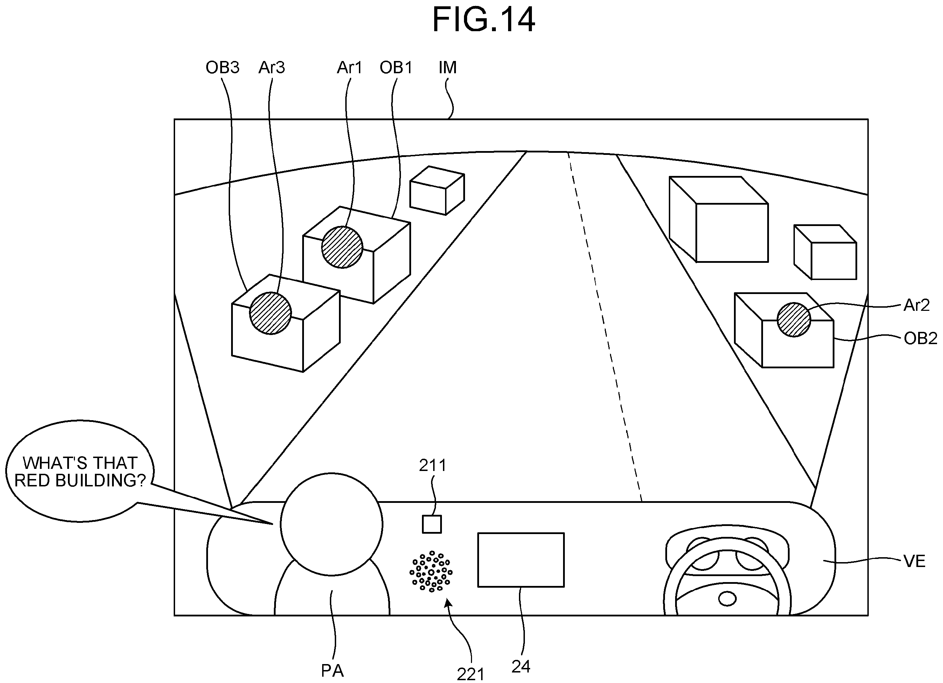

FIG. 13 is a flowchart illustrating the information providing method. FIG. 14 is a diagram for explanation of the information providing method. Specifically, FIG. 14 is a diagram corresponding to FIG. 5 and illustrates the captured image IM generated by the imaging unit 23 and obtained at Step S4. Differently from the example in FIG. 5, FIG. 14 illustrates, as an example, a case where a passenger PA sitting in the front passenger seat of a vehicle VE is speaking words, "What's that red building?".

The information providing method according to this fourth embodiment has, as illustrated in FIG. 13, Steps S6C1, S6C2, and S7C added to the information providing method (see FIG. 4) described above with respect to the first embodiment. Therefore, only Steps S6C1, S6C2, and S7C will be described mainly below. Steps S6C1, S6C2, and Step S6 each correspond to an object recognizing step according to this embodiment. Furthermore, Steps S7C and Step S7 each correspond to an information providing step according to this embodiment.

Step S6C1 is executed after Step S5.

Specifically, at Step S6C1, the control unit 32 determines whether or not the number of areas of interest extracted at Step S5 is plural, similarly to Step S6A1 described above with respect to the second embodiment. FIG. 14 illustrates, as an example, a case where three areas of interest Ar1 to Ar3 have been extracted at Step S5, similarly to FIG. 8.

If it has been determined that the number of areas of interest is one (Step S6C1: No), the control unit 32 proceeds to Step S6 and recognizes an object (for example, an object OB1) included in that single area of interest (for example, the area of interest Ar1, similarly to the first embodiment described above).

On the contrary, if it has been determined that the number of areas of interest is plural (Step S6C1: Yes), the control unit 32 proceeds to Step S6C2.

The object recognizing unit 325C then recognizes objects OB1 to OB3 respectively included in the three areas of interest Ar1 to Ar3 extracted at Step S5, in the captured image IM, by image recognition using the second learning model stored in the second learning model DB 332 (Step S6C2).

After Step S6C2, the information providing unit 326C executes Step S7C.

Specifically, at Step S7C, the information providing unit 326C identifies one object of the objects recognized at Step S6C2. The information providing unit 326C identifies the one object on the basis of: an attribute or attributes of an object included in request information (voice information); and three pieces of object information respectively corresponding to the objects OB1 to OB3 recognized at Step S6C2, the three pieces of object information being from object information stored in the object information DB 333.

The attribute/attributes of the object included in the request information (the voice information) is/are generated by analysis of the request information (the voice information) at Step S2. For example, in the case where the passenger PA in the vehicle VE has spoken the words, "What's that red building?", as illustrated in FIG. 14, the word, "red", and the word, "building", are the attributes of the object. Specifically, an attribute or attributes of an object is/are information indicating any of the color, such as red, the shape, such as quadrilateral, and the type, such as building. The information providing unit 326C then identifies, at Step S7C, one object (for example, the object OB3) corresponding to the piece of object information including text data, "red" and "building", by referring to the three pieces of object information respectively corresponding to the objects OB1 to OB3. Furthermore, the information providing unit 326C then transmits the piece of object information corresponding to the one object identified, to the in-vehicle terminal 2 via the communication unit 31.

The fourth embodiment described above has the following effects, in addition to effects similar to the above described effects of the first embodiment.

In a case where the plural areas of interest Ar1 to Ar3 have been extracted in the captured image IM, the information providing apparatus 3C according to this fourth embodiment provides a piece of object information related to one object of the objects OB1 to OB3 respectively included in these plural areas of interest Ar1 to Ar3 on the basis of a result of analysis of request information (voice information).

Therefore, even in a case where the plural areas of interest Ar1 to Ar3 have been extracted in the captured image IM, the object OB3 for which the passenger PA in the vehicle VE desires to obtain object information is able to be identified accurately. Therefore, an appropriate piece of object information is able to be provided to the passenger PA in the vehicle VE.

### Other Embodiments

Modes for implementing the present invention have been described above, but the present invention is not to be limited only to the above described first to fourth embodiments.

The above described information providing apparatuses 3, and 3A to 3C according to the first to fourth embodiments each execute the processing triggered by obtainment of request information (voice information) including a specific keyword or keywords, the processing including the image obtaining step, the area extracting step, the object recognizing step, and the information providing step. However, an information providing apparatus according to an embodiment may be configured to execute the processing constantly without obtaining request information (voice information) including a specific keyword or keywords. Furthermore, request information according to an embodiment is not necessarily voice information, and may be operation information according to an operation by a passenger PA in a vehicle VE, the operation being on an operating unit, such as a switch, provided in the in-vehicle terminal 2 or 2B.

In the first to fourth embodiments described above, all of the components of any of the information providing apparatuses 3 and 3A to 3C may be provided in the in-vehicle terminal 2 or 2B. In that case, the in-vehicle terminal 2 or 2B corresponds to an information providing apparatus according to an embodiment. Furthermore, some of functions of the control unit 32 and a part of the storage unit 33, in any of the information providing apparatuses 3 and 3A to 3C may be provided in the in-vehicle terminal 2 or 2B. In that case, the whole information providing system 1 corresponds to an information providing apparatus according to an embodiment.

### Reference Signs List

3, 3A TO 3C INFORMATION PROVIDING APPARATUS
321 REQUEST INFORMATION OBTAINING UNIT
322 VOICE ANALYZING UNIT
323 IMAGE OBTAINING UNIT
324 AREA EXTRACTING UNIT
325, 325A TO 325C OBJECT RECOGNIZING UNIT
326, 326C INFORMATION PROVIDING UNIT
327 POSTURE DETECTING UNIT

## Claims

1. An information providing apparatus (3A), comprising:
an image obtaining unit (323) configured to obtain a captured image having, captured therein, surroundings of a vehicle (VE);
a posture detecting unit (327) configured to detect a posture of a passenger in the vehicle (VE);
an area extracting unit (324) configured to extract a plurality of areas of interest in the captured image;
an object recognizing unit (325) configured to identify one area of interest of the plurality of areas of interest on the basis of the posture and to recognize an object included the identified area of interest in the captured image; and
an information providing unit (326) configured to provide object information related to the object included in the identified area of interest.

2. The information providing apparatus (3A) according to claim 1, wherein
the captured image includes a subject that is the passenger in the vehicle (VE), and
the posture detecting unit (327) is configured to detect the posture by detecting a skeleton of the passenger, on the basis of the captured image.

3. The information providing apparatus (3A) according to claim 1, further comprising:
a positional information obtaining unit configured to obtain positional information related to a position of the vehicle (VE); and
a facility information obtaining unit configured to obtain facility information related to a facility, wherein
the object recognizing unit (325) is configured to recognize the object included in the area of interest on the basis of the positional information and the facility information.

4. The information providing apparatus (3A) according to claim **1,** further comprising:
a request information obtaining unit (321) configured to obtain request information that is from the passenger in the vehicle (VE) requesting the object information to be provided, wherein
the information providing unit (326) is configured to provide the object information in response to the request information.

5. The information providing apparatus (3A) according to claim **4,** wherein
the request information is voice information related to voice spoken by the passenger,
the information providing apparatus (3) further comprises a voice analyzing unit configured to make an analysis of the voice information,
the area extracting unit (324) is configured to extract a plurality of the areas of interest,
the object recognizing unit (325) is configured to recognize objects respectively included in the plurality of areas of interest, and
the information providing unit (326) is configured to provide the object information related to any one object of the objects respectively included in the plurality of areas of interest, on the basis of a result of the analysis of the voice information.

6. An information providing method executed by an information providing apparatus (3A), the information providing method including:
obtaining (S4) a captured image having, captured therein, surroundings of a vehicle (VE);
detecting (S6A2) a posture of a passenger in the vehicle (VE);
extracting (S5) a plurality of areas of interest in the captured image;
identifying (S6A3) one area of interest of the plurality of areas of interest on the basis of the posture;
recognizing (S6) an object included the identified area of interest in the captured image; and
providing (S7) object information related to the object included in the identified area of interest.

7. A non-transitory computer-readable storage medium having stored therein an information providing program for causing a computer to execute:
obtaining (S4) a captured image having, captured therein, surroundings of a vehicle (VE);
detecting (S6A2) a posture of a passenger in the vehicle (VE);
extracting (S5) a plurality of areas of interest in the captured image;
identifying (S6A3) one area of interest of the plurality of areas of interest on the basis of the posture;
recognizing an object (S6) included the identified area of interest in the captured image; and
providing (S7) object information related to the object included in the identified area of interest.

## Patentansprüche

1. Informationsbereitstellungseinrichtung (3A), umfassend:
eine Bilderfassungseinheit (323), die ausgebildet ist, um ein aufgenommenes Bild zu erfassen, in dem die Umgebung eines Fahrzeugs (VE) darin aufgenommen ist;
eine Körperhaltungsdetektierungseinheit (327), die ausgebildet ist, um eine Körperhaltung eines Fahrgastes im Fahrzeug (VE) zu detektieren;
eine Bereichsextraktionseinheit (324), die ausgebildet ist, um eine Vielzahl von Interessensbereichen in dem aufgenommenen Bild zu extrahieren;
eine Objekterkennungseinheit (325), die ausgebildet ist, um auf der Grundlage der Körperhaltung einen Interessensbereich aus der Vielzahl von Interessensbereichen zu identifizieren und ein Objekt zu erkennen, das in dem identifizierten Interessensbereich in dem aufgenommenen Bild eingeschlossen ist; und
eine Informationsbereitstellungseinheit (326), die ausgebildet ist, um Objektinformationen in Bezug auf das im identifizierten Interessensbereich eingeschlossene Objekt bereitzustellen.

2. Informationsbereitstellungseinrichtung (3A) nach Anspruch 1, wobei
das aufgenommene Bild eine Person einschließt, die der Fahrgast im Fahrzeug (VE) ist, und
die Körperhaltungsdetektierungseinheit (327) ausgebildet ist, um die Körperhaltung auf der Grundlage des aufgenommenen Bildes durch Detektieren eines Skelettmodells des Fahrgastes zu detektieren.

3. Informationsbereitstellungseinrichtung (3A) nach Anspruch 1, weiter umfassend:
eine Positionsinformationserfassungseinheit, die ausgebildet ist, um Positionsinformationen in Bezug auf eine Position des Fahrzeugs (VE) zu erfassen; und
eine Örtlichkeitsinformationserfassungseinheit, die ausgebildet ist, um Örtlichkeitsinformationen in Bezug auf eine Örtlichkeit zu erfassen, wobei
die Objekterkennungseinheit (325) ausgebildet ist, um das im Interessensbereich eingeschlossene Objekt auf der Grundlage der Positionsinformationen und der Örtlichkeitsinformationen zu erkennen.

4. Informationsbereitstellungseinrichtung (3A) nach Anspruch 1, weiter umfassend:
eine Anforderungsinformationserfassungseinheit (321), die ausgebildet ist, Anforderungsinformationen zu erfassen, die von dem Fahrgast im Fahrzeug (VE) stammen und mit denen die Bereitstellung der Objektinformationen angefordert wird, wobei
die Informationsbereitstellungseinheit (326) ausgebildet ist, die Objektinformationen als Antwort auf die Anforderungsinformationen bereitzustellen.

5. Informationsbereitstellungseinrichtung (3A) nach Anspruch 4, wobei
die Anforderungsinformationen Sprachinformationen sind, die sich auf die vom Fahrgast gesprochene Sprache beziehen,
die Informationsbereitstellungseinrichtung (3) weiter eine Sprachanalyseeinheit umfasst, die ausgebildet ist, die Sprachinformationen zu analysieren,
die Bereichsextraktionseinheit (324) ausgebildet ist, eine Vielzahl der Interessensbereiche zu extrahieren,
die Objekterkennungseinheit (325) ausgebildet ist, jeweils in der Vielzahl von Interessensbereichen eingeschlossenen Objekte zu erkennen, und
die Informationsbereitstellungseinheit (326) ausgebildet ist, auf der Grundlage eines Ergebnisses der Analyse der Sprachinformationen die Objektinformationen zu einem beliebigen Objekt unter den jeweils in der Vielzahl von Interessensbereichen eingeschlossenen Objekten bereitzustellen.

6. Informationsbereitstellungsverfahren, ausgeführt von einer Informationsbereitstellungseinrichtung (3A), wobei das Informationsbereitstellungsverfahren Folgendes einschließt:
Erfassen (S4) eines aufgenommenen Bildes, in dem die Umgebung eines Fahrzeugs (VE) darin aufgenommen ist;
Detektieren (S6A2) einer Körperhaltung eines Fahrgastes im Fahrzeug (VE);
Extrahieren (S5) einer Vielzahl von Interessensbereichen in dem aufgenommenen Bild;
Identifizieren (S6A3) eines Interessensbereichs aus der Vielzahl von Interessensbereichen auf der Grundlage der Körperhaltung;
Erkennen (S6) eines im identifizierten Interessensbereich in dem aufgenommenen Bild eingeschlossenen Objekts; und
Bereitstellen (S7) von Objektinformationen zu dem im identifizierten Interessensbereich eingeschlossenen Objekt.

7. Nicht-transitorisches, computerlesbares Speichermedium, auf dem ein Informationsbereitstellungsprogramm gespeichert ist, das einen Computer veranlasst, Folgendes auszuführen:
Erfassen (S4) eines aufgenommenen Bildes, in dem die Umgebung eines Fahrzeugs (VE) darin aufgenommen ist;
Detektieren (S6A2) einer Körperhaltung eines Fahrgastes im Fahrzeug (VE);
Extrahieren (S5) einer Vielzahl von Interessensbereichen in dem aufgenommenen Bild;
Identifizieren (S6A3) eines Interessensbereichs aus der Vielzahl von Interessensbereichen auf der Grundlage der Körperhaltung;
Erkennen (S6) eines im identifizierten Interessensbereich in dem aufgenommenen Bild eingeschlossenen Objekts; und
Bereitstellen (S7) von Objektinformationen zu dem im identifizierten Interessensbereich eingeschlossenen Objekt.

## Revendications

1. Appareil (3A) de fourniture d'informations, comprenant :
une unité (323) d'obtention d'image, configurée pour obtenir une image capturée incluant les environs d'un véhicule (VE) ;
une unité (327) de détection de posture, configurée pour détecter une posture d'un passager dans le véhicule (VE) ;
une unité (324) d'extraction de zones, configurée pour extraire une pluralité de zones d'intérêt dans l'image capturée ;
une unité (325) de reconnaissance d'objet, configurée pour identifier, sur la base de la posture, une zone d'intérêt parmi la pluralité de zones d'intérêt et pour reconnaître un objet inclus dans la zone d'intérêt identifiée dans l'image capturée ; et
une unité (326) de fourniture d'informations, configurée pour fournir des informations d'objet relatives à l'objet inclus dans la zone d'intérêt identifiée.

2. Appareil (3A) de fourniture d'informations selon la revendication 1, dans lequel
l'image capturée inclut un sujet qui est le passager dans le véhicule (VE), et
l'unité (327) de détection de posture est configurée pour détecter la posture en détectant un squelette du passager, sur la base de l'image capturée.

3. Appareil (3A) de fourniture d'informations selon la revendication 1, comprenant en outre :
une unité d'obtention d'informations de position, configurée pour obtenir des informations de position relatives à une position du véhicule (VE) ; et
une unité d'obtention d'informations d'installation, configurée pour obtenir des informations d'installation relatives à une installation, dans lequel
l'unité (325) de reconnaissance d'objet est configurée pour reconnaître l'objet inclus dans la zone d'intérêt sur la base des informations de position et des informations d'installation.

4. Appareil (3A) de fourniture d'informations selon la revendication 1, comprenant en outre :
une unité (321) d'obtention d'informations de demande, configurée pour obtenir des informations de demande provenant du passager dans le véhicule (VE) demandant que des informations d'objet soient fournies, dans lequel
l'unité (326) de fourniture d'informations est configurée pour fournir les informations d'objet en réponse aux informations de demande.

5. Appareil (3A) de fourniture d'informations selon la revendication 4, dans lequel
les informations de demande sont des informations vocales relatives à la voix émise par le passager,
l'appareil (3) de fourniture d'informations comprend en outre une unité d'analyse vocale configurée pour effectuer une analyse des informations vocales,
l'unité (324) d'extraction de zones est configurée pour extraire une pluralité de zones d'intérêt,
l'unité (325) de reconnaissance d'objet est configurée pour reconnaître des objets respectivement inclus dans la pluralité de zones d'intérêt, et
l'unité (326) de fourniture d'informations est configurée pour fournir les informations d'objet relatives à un objet quelconque parmi les objets respectivement inclus dans la pluralité de zones d'intérêt, sur la base d'un résultat de l'analyse des informations vocales.

6. Procédé de fourniture d'informations mis en œuvre par un appareil (3A) de fourniture d'informations, le procédé de fourniture d'informations comprenant :
le fait d'obtenir (S4) une image capturée incluant les environs d'un véhicule (VE) ;
le fait de détecter (S6A2) une posture d'un passager dans le véhicule (VE) ;
le fait d'extraire (S5) une pluralité de zones d'intérêt dans l'image capturée ;
le fait d'identifier (S6A3) une zone d'intérêt de la pluralité de zones d'intérêt sur la base de la posture ;
le fait de reconnaître (S6) un objet inclus dans la zone d'intérêt identifiée dans l'image capturée ; et
le fait de fournir (S7) des informations d'objet relatives à l'objet inclus dans la zone d'intérêt identifiée.

7. Support de stockage non transitoire lisible par ordinateur dans lequel est enregistré un programme de fourniture d'informations amenant un ordinateur à mettre en œuvre :
le fait d'obtenir (S4) une image capturée incluant les environs d'un véhicule (VE) ;
le fait de détecter (S6A2) une posture d'un passager dans le véhicule (VE) ;
le fait d'extraire (S5) une pluralité de zones d'intérêt dans l'image capturée ;
le fait d'identifier (S6A3) une zone d'intérêt de la pluralité de zones d'intérêt sur la base de la posture ;
le fait de reconnaître (S6) un objet inclus dans la zone d'intérêt identifiée dans l'image capturée ; et
le fait de fournir (S7) des informations d'objet relatives à l'objet inclus dans la zone d'intérêt identifiée.
